# EUROPÄISCHE PATENTSCHRIFT

(11) **EP 0 492 313 B1**
(45) Veröffentlichungstag und Bekanntmachung des Hinweises auf die Patenterteilung: **24.08.1994**
(21) Anmeldenummer: 91121407.0
(22) Anmeldetag: 13.12.1991
(51) Int. Cl.: B65G 53/46

(54) **Vorrichtung zum Dosieren von Schüttgut**
Dosing device for bulk material
Dispositif de dosage pour produits en vrac

(30) Priorität: 21.12.1990 DE 4041110
(43) Veröffentlichungstag der Anmeldung: 01.07.1992
(73) Patentinhaber: ZEPPELIN SCHÜTTGUTTECHNIK GmbH, D-88250 Weingarten (DE)
(72) Erfinder: Bercx, Helmut, Dipl.-Ing., W-7962 Wolfegg (DE)
(74) Vertreter: Patentanwälte Eisele, Otten & Roth

(56) Entgegenhaltungen:
- AU-B- 538 178
- DE-A- 3 025 048
- DE-A- 3 400 595
- DE-A- 3 614 303
- GB-A- 943 803

## Beschreibung

Die Erfindung betrifft eine Vorrichtung zum Dosieren von Schüttgut nach dem Oberbegriff des Anspruchs 1.

### Stand der Technik:

Bekannte Vorrichtungen zum Dosieren von Schüttgut bestehen aus einem um eine senkrechte Achse in einem zylindrischen Gehäuse drehenden Rotor mit radialen Schaufeln, der an seiner Oberseite mit einer mit Durchbrüchen für den Schüttgutzulauf versehenen stationären Abdeckplatte und an seiner Unterseite mit einer zugehörigen stationären unteren Abdeckplatte mit Austragsöffnung abgedeckt ist, wobei die obere und die untere Austragsöffnung um einen Drehwinkel von 180° zueinander versetzt angeordnet sind. Derartige Dosiervorrichtungen werden als Horizontal-Austrags-Zellenradschleusen bezeichnet.

Aus der DE-A-35 44 014 ist eine derartige Zellenradschleuse bekannt geworden, die zur Förderung von Schüttgut aus einem Raum beliebig hohen Druckes in einem Raum gleichhohen, höheren oder niedrigeren Druckes dient. Der um eine vertikale Achse drehende Rotor des Zellenrades bildet Aufnahmetaschen für das Schüttgut, welche an der Oberseite der Zellenradschleuse mit Schüttgut gefüllt und nach einer Drehung um ca. 180° an der Unterseite entleert werden.

Es sind auch Zellenradschleusen mit um eine horizontale Achse drehenden Rotoren bekannt, die prinzipiell gleich arbeiten wie zuvor beschrieben.

Derartige Zellenradschleusen werden an ihrer Austragsseite an unter einem Förderdruck stehenden Förderleitungen angeschlossen. Druck und Luftmenge dieser Förderleitungen konnten jedoch aufgrund von erheblichen Leckageverlusten in der Zellenradschleuse nicht in der gewünschten Höhe aufrecht erhalten werden. Dies gilt umso mehr dann, wenn mehrere derartige Zellenradschleusen nacheinander oberhalb einer gemeinsamen Förderleitung angeordnet sind, um aus verschiedenen Silos zu fördern.

In einer Zellenradschleuse mit drehendem Rotor treten Leckageverluste aufgrund von nicht vermeidbaren Spalten sowohl zwischen dem drehenden Rotor und der unteren und oberen Abdeckplatte als auch zwischen dem drehenden Rotor und der Zylinderwandung des Rotorgehäuses auf. Ein hoher Aufwand zur Abdichtung und Kleinhaltung dieser Spalte hält zwar den Leckageverlust in Grenzen, der wirtschaftliche Einsatz derartiger Zellenradschleusen erfolgte jedoch aufgrund dieser Leckageverluste nur bis zu einem Überdruck in der Förderleitung in der Größenordnung von ca. 1 bar.

Aus der gattungsbildenden DE-C-30 25 048 ist weiterhin eine Dosiervorrichtung bekannt geworden, bei welcher anstelle eines drehenden Zellenrades drehende obere und untere Abdeckplatten verwendet werden. Hierdurch bleibt das Zellengehäuse stationär. Die Zufuhr des Schüttgutes erfolgt über eine obere drehende Abdeckplatte mit einer kreissegmentförmigen Zuführöffnung. Ebenso erfolgt die Abfuhr des Schüttgutes aus den stationären Zellen über eine untere rotierende Abdeckplatte mit einer, der oberen Zuführöffnung gegenüberliegenden Abführöffnung. Diese Dosiervorrichtung hat gegenüber denjenigen mit rotierendem Zellenrad den Vorteil, daß die Spaltlänge und bei gleicher Spaltbreite somit auch die Spaltfläche erheblich reduziert wird, da kein rotierendes Zellenrad mit entsprecheden senkrechten Spalten mehr vorhanden ist. Vielmehr muß hier lediglich eine waagerechte Abdichtung im oberen und im unteren Bereich der rotierenden Abdeckplatten gegenüber dem Zellengehäuse stattfinden. Eine derartige Dosiervorrichtung erlaubt deshalb den Einsatz von höheren Förderdrücken bzw. Druckdifferenzen zwischen der Förderleitung unterhalb und dem Silo oberhalb der Zellenradschleuse.

Nachteilig an dieser bekannten Vorrichtung mit stationärem Zellengehäuse ist die aufwendige Mechanik zur Durchführung der Drehbewegung der oberen und unteren Abdeckplatte. Der Antrieb der zentralen Antriebswelle und deren aufwendige Lagerung und Abdichtung erfordern eine aufwendige und komplizierte Herstellung. Im übrigen benötigt dieser Antrieb einen großen Teil des zentralen Bereichs des Zellengehäuses. Weiterhin muß eine Antriebswelle radial nach außen geführt werden. Neben dem komplizierten Antrieb ist eine derartige Dosiervorrichtung auch schlecht zu reinigen, da ein Auseinanderbauen der einzelnen Antriebsbestandteile unter Praxisbedingungen außerordentlich kompliziert und aufwendig ist.

Aus der US-RE 29,347 oder der GB-A-21 66 714 sind Dosiervorrichtungen bekanntgeworden, die einen exentrischen Antrieb aufweisen. In der erstgenannten Druckschrift werden über ein Getriebe sowohl das Zellenrad als auch die beiden Abdeckplatten angetrieben. Die Relation dieser Antriebe zueinander ergibt die Förderleistung der Dosiervorrichtung. Die Dosiervorrichtung gemäß GB-A-21 66 714 enthält keine kreissegmentförmige Kammern und ist zur Förderung größerer Mengen nicht geeignet. Der Antrieb der beiden Abdeckplatten erfolgt ähnlich wie bei der DE-C-30 25 048 über eine zentrale Welle.

### Vorteile der Erfindung:

Die erfindungsgemäße Vorrichtung mit den kennzeichnenden Merkmalen des Hauptanspruchs hat gegenüber den bekannten Vorrichtungen den Vorteil, daß eine außerordentlich einfach aufgebaute Dosiervorrichtung geschaffen wird, die eine sehr hohe Druckdifferenz zwischen der Förderleitung und dem Silo oder auch umgekehrt ermöglicht. Das Zellengehäuse wird nicht von komplizierten Antriebsmechanismen durchsetzt, d.h. der Antrieb für die rotierenden Abdeckplatten ist exzentrisch nach außen versetzt und befindet sich seitlich vom Zellengehäuse. Der Antrieb der oberen und/oder unteren Abdeckplatte erfolgt zweckmäßigerweise über eine Außenverzahnung, die mit einem Antriebsritzel zusammenwirkt. Dabei sind das obere und das untere Antriebsritzel für die obere und die untere Abdeckplatte über eine gemeinsame Antriebswelle mit zughörigem Antriebsmotor verbunden.

Anstelle eines Zahnradantriebs können die Abdeckplatten auch über einen entsprechenden Zahnriemenantrieb oder eine Rollenkette angetrieben werden. Vorteilhaft ist der exzentrische Antrieb, der die Anordnung aller Antriebsorgane seitlich des Zellengehäuses erlaubt.

Die obere und die untere Abdeckplatte werden durch den Antrieb exzentrisch belastet. Demzufolge sind diese Abdeckplatten über außerhalb des Produktraumes angeordnete Kugellager axial und radial geführt, wobei infolge der vorhandenen Druckdifferenz die größere Belastung in axialer Richtung erfolgt.

Gemäß der Erfindung ist vorgesehen, daß jede Abdeckplatte zwischen zwei Flanschplatten gelagert ist, die ihrerseits auch das Antriebsritzel für die Abdeckplatte einschließen. Der gesamte Aufnahmeflansch für jede Abdeckplatte besteht demnach aus einer oberen und einer unteren Flanschplatte, die die Lagerung der Abdeckplatte und die Aufnahme des zugehörigen Antriebs übernimmt. Gleichzeitig sind darin Dichtungen vorgesehen.

Die Dosiervorrichtung ist sehr einfach aufgebaut, so daß insbesondere das Zellengehäuse mit einfachsten Handgriffen herausschwenkbar ist, um ggf. auch eine gründliche Reinigung durchführen zu können. Dies geschieht durch einfaches Lösen der Zuganker, wodurch das Zellengehäuse seitlich herausgeschwenkt werden kann und wobei ein Zuganker als vertikale Schwenkachse für das Zellengehäuse dient. Die obere und die untere Abdeckplatte bleiben während dieses Schwenkvorgangs in ihrer Lage unverändert, so daß auch der Antrieb für die beiden Abdeckplatten stationär verbleiben kann.

Für die Verspannung des Zellengehäuses werden zweckmäßigerweise drei zentrisch um das Zellengehäuse angeordnete Zuganker verwendet, wobei z. B. einer der Zuganker oder ein Scharnier gleichzeitig die vertikale Schwenkachse für das Zellengehäuse bildet.

Die erfindungsgemäße Vorrichtung sieht weiterhin eine Entlüftungseinrichtung vor, die zum vorzeitigen Druckausgleich zwischen einer Kammer des Zellengehäuses und dem Silo dient.

Hierfür ist eine Druckausgleichsbohrung vorgesehen, die der Zuführöffnung in der Abdeckplatte voreilt, d.h. die einen Druckausgleich mit einer Kammer des Zellengehäuses durchführt, bevor diese unterhalb der Zuführöffnung vom Silo zu liegen kommt.

Weitere Einzelheiten und Vorteile der Erfindung sind in der nachfolgenden Beschreibung eines Ausführungsbeispiels angegeben. Die zugehörigen Zeichnungen zeigen in
- Fig. 1: einen Längsschnitt durch die erfindungsgemäße Dosiervorrichtung,
- Fig. 2: einen Schnitt entlang der Schnittlinie A-A in Fig. 1,
- Fig. 3: eine Schnitt entlang der Schnittlinie B-B in Fig. 1 und
- Fig. 4: eine Draufsicht entsprechend der Pfeildarstellung X

### Beschreibung der Erfindung:

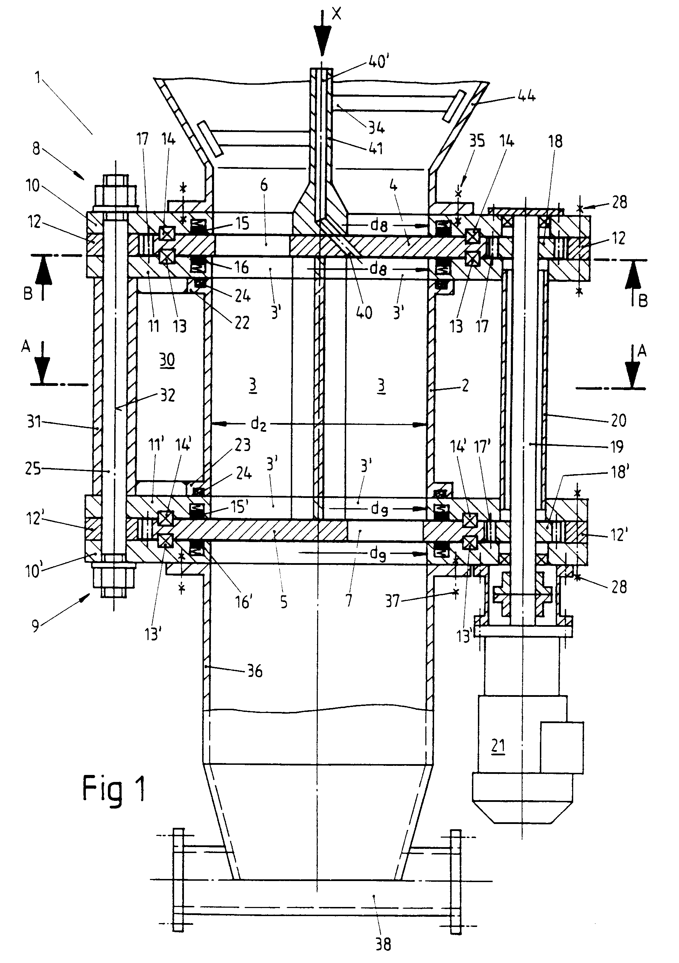

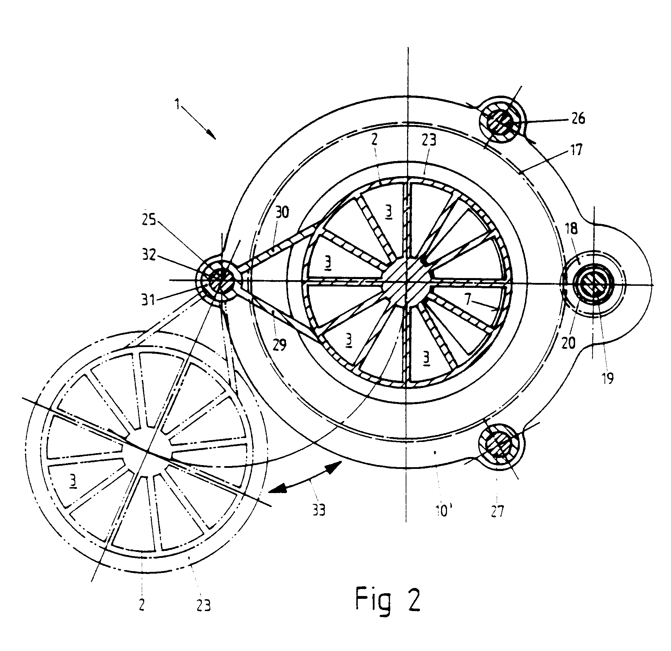

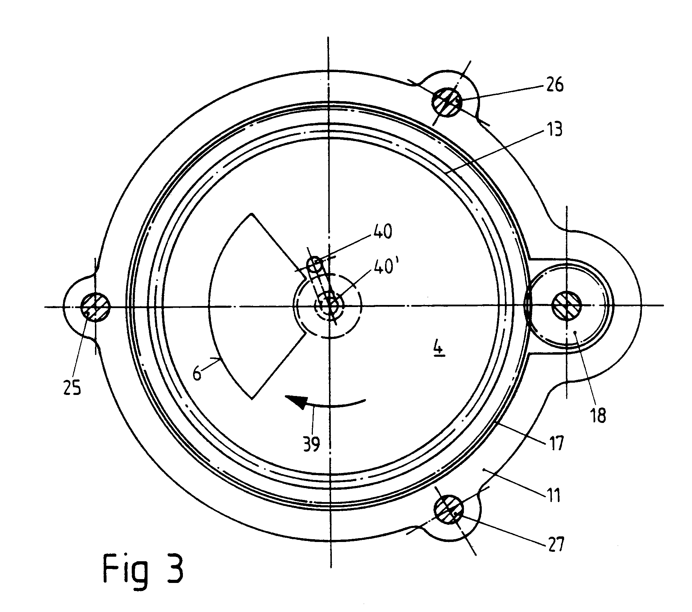

Die in der Fig. 1 in einem Längsschnitt dargestellte Dosiervorrichtung 1 besteht aus einem zylindrischen Zellengehäuse 2 welches gemäß der Darstellung in Fig. 2 in eine Vielzahl von Einzelkammern 3 mit kreissegmentförmigen oder kreisringsegmentförmigen Querschnitt aufgeteilt ist. Die Darstellung in Fig. 2 zeigt 12 derartige Einzelkammern 3. Das Zellengehäuse 2 wird in seinem oberen Bereich durch eine obere Abdeckplatte 4, in seinem unteren Bereich durch eine untere Abdeckplatte 5 abgedeckt. Jede dieser kreisförmigen Abdeckplatten 4, 5 weist einen kreisring-segmentförmigen Ausschnitt auf, der als obere Zuführöffnung 6 und als untere Abführöffnung 7 ausgebildet ist. In Fig. 2 ist die untere Abführöffnung 7 als Kreisringsegment unterhalb der Kammern 3 auf der rechten Figurenhälfte dargestellt. In der Fig. 3 ist die obere Kreisringsegmentfläche 6 innerhalb der oberen Abdeckplatte 4 dargestellt. Aus Fig. 1 ist ersichtlich, daß die Zuführöffnung 6 gegenüber der Abführöffnung 7 um einen Drehwinkel von 180° versetzt angeordnet ist. Demzufolge kann jede Kammer 3 gleichzeitig maximal nur eine einzige Zuführöffnung oder Abführöfnung bei rotierenden Abdeckplatten 4, 5 aufweisen.

Die Abdeckplatten 4, 5 sind in jeweils einem Aufnahmeflansch 8, 9 eingebettet bzw. integriert. Der obere Aufnahmeflansch 8 besteht aus einer oberen Flanschplatte 10 und einer unteren Flanschplatte 11 die über Abstandshalter 12 in einem solchen Abstand zueinander stehen, daß die obere Abdeckplatte 4 mit geringstmöglichem Spiel zwischen diesen Flanschplatten 10, 11 geführt ist. Für die Führung der oberen Abdeckplatte 4 dienen ein unteres Kugellager 13 und ein oberes Kugellager 14, die die axiale und die radiale Lagerung der oberen Abdeckplatte 4 zwischen den beiden Flanschplatten 10, 11 übernehmen. Vorstehendes gilt sinngemäß für die untere Abdeckplatte 5.

Gegenüber den Kugellagern 13, 14 radial innenliegend sind obere und untere Dichtungen 15, 16 vorgesehen, die eine Abdichtung gegenüber dem Innenraum der Dosiervorrichtung übernehmen. Der Innendurchmesser d₈, d₉ der Aufnahmeflansche 8, 9 für den Materialdurchtritt entspricht dem Innendurchmesser d₂ des Zellengehäuses 2, damit kein Materialstau eintritt. Die dem Zellengehäuse 2 zugewandten Flansche 11, 11' können in ihrem inneren Querschnittsbereich deckungsgleich sein mit dem Querschnitt des Zellengehäuses 2, d. h. es sind deckungsgleiche Kammern 3' vorhanden. Die Flansche 11, 11' stellen somit eine axiale Verlängerung des Zellengehäuses 2 mit Kammern 3, 3' dar.

Der Antrieb der oberen Abdeckplatte 4 erfolgt über eine Außenverzahnung 17 der kreisrunden Abdeckplatte 4, die mit einem Antriebsritzel 18 zusammen wirkt. Das Ritzel 18 wird über eine vertikale Antriebswelle 19, die in einem Wellengehäuse 20 geschützt ist, durch einen Antriebsmotor 21 angetrieben.

Der Aufbau des unteren Aufnahmeflansches 9 für die Einbettung oder die Umschließung der unteren Abdeckplatte 5 ist spiegelbildlich identisch mit der zuvor beschriebenen Anordnung des oberen Aufnahmeflansches 8. Gleiche Teile sind deshalb mit gleichen Bezugszeichen versehen.

Die Antriebswelle 19 treibt demnach gleichermaßen das obere Antriebsritzel 18 für die obere Abdeckplatte 4 und das untere Antriebsritzel 18' für die untere Abdeckplatte 5 an. Hierdurch laufen die beiden Öffnungen 6, 7 stets um einen Drehwinkel von 180° versetzt synchron zueinander.

Das Zellengehäuse 2 mit den Einzelkammern 3 ist über einen oberen Übergangsflansch 22 und einen unteren Übergangsflansch 23 der jeweils eine Dichtungsanordnung 24 aufweist, mit der jeweiligen Flanschplatte 11, 11' der Aufnahmeflansche 8, 9 verbunden. Um die gesamte Dosiervorrichtung zusammenzuhalten, sind gemäß der Darstellung in Fig. 2 in einem Winkelabstand von 120° drei Zuganker 25 - 27 vorgesehen, die das Zellengehäuse 2 mit den Aufnahmeflanschen 8, 9 verspannen. Dabei dient eine weitere, mehrfach angeordnete Schraubverbindung 28 zur Verbindung der oberen und unteren Flanschplatten 10, 11 bzw. 10', 11'.

Das Zellengehäuse 2 ist über zwei v-förmig zueinander angeordnete Anschlußflansche 29, 30 (siehe Fig. 2) mit einer Drehbuchse 31 verbunden, die sich als Lagerbüchse um den Zuganker 25 schließt. Wie aus Fig. 2 ersichtlich, kann z. B. demzufolge nach einer Lösung und Entspannung der Zuganker 25 - 27 das Zellengehäuse 2 um die vertikale Längsachse 32 nach außen geschwenkt werden, was durch die Schwenkrichtung 33 gezeigt ist. Diese Schwenkposition des Zellengehäuses 2 ist in Fig. 2 gestrichelt dargestellt. Während dieses Vorgangs bleiben alle Schraubverbindungen 28 zum Zusammenhalt der oberen und unteren Flanschplatten 10, 11 vollständig bestehen, so daß der Aufnahmeflansch 8, 9 in seiner Anordnung und Funktionsweise völlig unberührt vom Schwenkvorgang bleibt. Eine umständliche Nachjustierung oder Ausrichtung dieser Teile nach jedem Schwenkvorgang ist deshalb nicht erforderlich.

Das sehr einfach aufgebaute Zellengehäuse 2 mit gradlinigen fluchtenden Einzelkammern 3 kann deshalb in der rausgeschwenkten Position nach Fig. 2 sehr einfach gründlich gereinigt und gewartet werden.

Das Ausschwenken des Zellengehäuses 2 erfolgt lediglich gegenüber der unteren Flanschplatte 11 des oberen Aufnahmeflansches 8 und der oberen Flanschplatte 11' des unteren Aufnahmeflansches 9 mit einer entsprechenden Abdichtung über die Dichtungsanordnung 24.

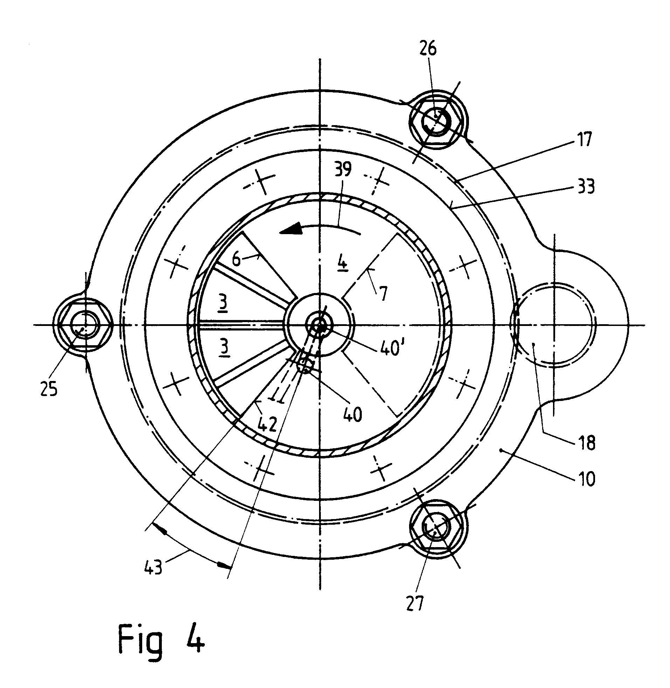

Im oberen Bereich wird auf die Dosiervorrichtung 1 ein Zuführtrichter 44 mit einem Rührwerk 34 zur Auflockerung und Zuführung von Schüttgut aufgesetzt. Eine Schraubverbindung 35 dient zur Verbindung des Zuführtrichters 44 mit der oberen Flanschplatte 10. In der Draufsicht nach Fig. 4 ist das Rührwerk 34 nicht näher dargestellt.

Gleichermaßen wird an die Dosiervorrichtung 1 in ihrem unteren Bereich ein zylindrischer Abführstutzen 36 über eine Schraubverbindung 37 an die untere Flanschplatte 10' befestigt. Der Abführstutzen 36 mündet an seinem unteren Ende in eine horizontale Förderleitung 38 für Schüttgut.

Die horizontale Förderleitung 38 kann einen hohen Förderdruck von beispielsweise 3 bar zur Förderung des Schüttgutes aufweisen. Dieser Druck pflanzt sich über die untere Abführöffnung 7 bis in die Einzelkammern 3 fort, so daß hier ein gleich hohes Druckniveau besteht. Durch die Drehung der oberen und der unteren Abdeckplatte (siehe Pfeil 39) würde die obere Zuführöffnung 6 beim Überstreichen jeder neuen Kammeröffnung einem starken Druckausgleich zwischen Einzelkammer 3 und Zuführtrichter 44 unterworfen sein, der zu einem gewissen Hochschleudern des an sich herabfallenden Schüttgutes führen würde. Dadurch verschlechtert sich der Füllgrad jeder Einzelkammer beträchtlich und damit auch die gesamte Dosierleistung der Dosiervorrichtung 1. Um einen Druckausgleich herzustellen, noch bevor die obere Zuführöffnung 6 über eine neue Einzelkammer 3 fährt, wird eine Druckausgleichsleitung 40 vorgesehen, die der oberen Zuführöffnung 6 voreilt und demzufolge einen Druckausgleich zwischen Zuführtrichter 44 und jeweils einer Einzelkammer 3 bereits dann ausführt, wenn diese nicht mehr mit der unteren Abführöffnung 7 und noch nicht mit der oberen Zuführöffnung 6 verbunden ist. Die Druckausgleichsleitung 40 ist über die zentrale Antriebsachse 41 für das Rührwerk 34 mit dem Innenraum des Zuführtrichters 44 verbunden. Der obere Leitungsabschnitt ist mit 40' bezeichnet (siehe auch Fig. 3 und 4).

Wie in Fig. 4 dargestellt, weist der Öffnungswinkel der oberen und unteren Zuführöffnung 6, 7 eine Größe auf, die etwa drei Einzelkammern 3 überstreicht. Die Druckausgleichsleitung 40 wird demnach derart angeordnet, daß sie der Vorderkante 42 der umlaufenden oberen Zuführöffnung 6 um einen geringen Betrag 43 voreilt.

Die Erfindung ist nicht auf das dargestellte und beschriebene Ausführungsbeispiel beschränkt. Sie umfaßt auch vielmehr alle fachmännischen Weiterbildungen im Rahmen der Ansprüche.

## Patentansprüche

1. Vorrichtung zum Dosieren von Schüttgut mit einem kreiszylindrischen, stationären Zellengehäuse (2) mit im Querschnitt kreissegmentförmigen Einzelkammern (3), die in ihrem oberen und unteren Bereich von je einer rotierenden, kreissegmentförmige Öffnung (6, 7) aufweisenden Abdeckplatte (4, 5) verschließbar sind, wobei die Dosiervorrichtung in ihrem oberen und unteren Bereich jeweils einen Aufnahmeflansch (8, 9) für die rotierenden Abdeckplatten (4, 5) aufweist, dadurch gekennzeichnet, daß der obere (8) und/oder der untere (9) Aufnahmeflansch (8, 9) für die jeweilige Abdeckplatte (4, 5) durch jeweils eine dem Zellengehäuse (2) abgewandten Flanschplatte (10, 10') und eine dem Zellengehäuse (2) zugewandte Flanschplatte (11, 11') gebildet sind ist, zwischen denen die jeweilige Abdeckplatte (4, 5) auf axial gegenüberliegenden Lagern (13, 13', 14, 14') drehbar gelagert ist, und daß die rotierbaren Abdeckplatten (4, 5) durch einen seitlich vom Zellengehäuse (2) angeordneten Antrieb (18, 19, 21) antreibbar sind.

2. Vorrichtung nach Anspruch 1, dadurch gekennzeichnet, daß der Antrieb der oberen und der unteren Abdeckplatte (4, 5) mittels einer jeweiligen Außenverzahnung (17, 17') an den Abdeckplatten (4, 5) erfolgt, die mit einem zugehörigen Antriebsritzel (18, 18') in Verbindung stehen.

3. Vorrichtung nach Anspruch 1 oder 2, dadurch gekennzeichnet, daß das Antriebsritzel (18, 18') für die obere und die untere Abdeckplatte (4, 5) über eine gemeinsame vertikale Antriebswelle (19) von einem gemeinsamen Motor (21) synchron angetriben sind.

4. Vorrichtung nach Anspruch 1 oder 2, dadurch gekennzeichnet, daß der Antrieb der oberen und unteren Abdeckplatte (4, 5) über jeweils einen, die Abdeckplatte umschließenden Zahnriemen oder Rollenkette erfolgt, wobei ein gemeinsamer Antrieb für beide Zahnriemen oder Rollenketten vorgesehen ist.

5. Vorrichtung nach Anspruch 1, dadurch gekennzeichnet, daß die Abdeckplatten (4, 5) gegenüber dem Aufnahmeflansch (8, 9) mit Flanschplatten (10, 10' bzw. 11, 11') über außerhalb des Produktraumes angeordnete Kugellager (13, 13',14, 14') axial und/oder radial gelagert sind.

6. Vorrichtung nach Anspruch 1 oder 5, dadurch gekennzeichnet, daß der obere (8) und der untere Aufnahmeflansch (9) für die jeweilige Abdeckplatte (4, 5) spiegelbildlich angeordnet sind und durch jeweils eine dem Zellengehäuse (2) abgewandte Flanschplatte (10, 10') und eine weitere, dem Zellengehäuse (2) zugewandte Flanschplatte (11, 11') gebildet sind, zwischen denen die jeweilige Abdeckplatte (4, 5) auf axial gegenüberliegenden Kugellagern (13, 13', 14, 14') gelagert ist, und daß das Zellengehäuse (2) vorzugsweise gegenüber der ihr jeweils zugewandten Flanschplatte (11, 11') verspannt und abgedichtet ist.

7. Vorrichtung nach Anspruch 1 oder 6, dadurch gekennzeichnet, daß die dem Zellengehäuse (2) zugewandte Flanschplatte (11, 11') einstückig mit diesem ausgebildet ist.

8. Vorrichtung nach einem der vorgehenden Ansprüche, dadurch gekennzeichnet, daß die Flanschplatte (10, 11) in ihrem Innendurchmesser dem Innendurchmesser des Zellengehäuses (2) angepaßt und daß vorzugsweise die Lagerung (13, 14) sowie der Antrieb (17, 18) der Flanschplatte (10, 11) gegenüber dem Zellengehäuseinnenraum (3, 3') mittels einer Dichtung (15, 16) abgedichtet ist.

9. Vorrichtung nach Anspruch 1, dadurch gekennzeichnet, daß das kreiszylindrische Zellengehäuse (2) zwischen dem oberen (8) und dem unteren (9), die jeweilige Abdeckplatte (4, 5) aufnehmenden stationären Aufnahmeflansch (8, 9) mittels wenigstens zwei Zugankern (25-27) verspannbar ist, die vorzugsweise wenigstens eine vertikale Schwenkachse (32) für das aus seiner Betriebslage herausschwenkbare Zellengehäuse (2) bilden.

10. Vorrichtung nach Anspruch 9, dadurch gekennzeichnet, daß drei das Zellengehäuse (2) zentrisch umgebende, vertikale Zuganker (25-27) vorgesehen sind, wobei ein Zuganker (25) vorzugsweise eine Drehbuchse (31) aufweist, die über zwei in Draufsicht v-förmig angeordnete Anschlußflansche (29, 30) oder ein entsprechendes Scharnier mit dem Zellengehäuse (2) verbunden ist.

11. Vorrichtung nach einem der vorgehenden Ansprüche, dadurch gekennzeichnet, daß die Dosiervorrichtung an eine pneumatische Förderleitung (38) mit einem Differenzdruck gegenüber dem Zuführtrichter (44) in der Größenordnung von 3,5 bar anschließbar ist.

12. Vorrichtung nach Anspruch 1 oder 11, dadurch gekennzeichnet, daß die obere, rotierende Abdeckplatte (4) in einem der Zuführöffnung (6) voreilenden Bereich eine Druckausgleichsleitung (40) aufweist, die einen Druckausgleich zwischen dem Druck in jeweils einer Kammer (3), hervorgerufen durch den Druck in der Förderleitung (38), und dem Innenraum des Zuführtrichters (44) durchführt.

13. Vorrichtung nach Anspruch 1 oder 8, dadurch gekennzeichnet, daß die dem Zellengehäuse (2) zugewandten Flanschplatten (11 und 11') eine dichte, mit dem Zellengehäuse (2) deckungsgleiche Aufteilung mit Einzelkammern (3') aufweisen.

## Claims

1. Device for metering bulk material, comprising a circular cylindrical, stationary cellular casing (2) having individual chambers (3) of circular segmental cross-section, which can be closed at their upper and lower regions each by a rotating cover plate (4, 5) having a circular segmental opening (6, 7), the metering device having, in its upper and in its lower region, a seating flange (8, 9) for the revolving cover plates (4, 5), characterized in that the upper (8) and/or the lower (9) seating flange (8, 9) for the respective cover plate (4, 5) are formed each by a flange plate (10, 10') facing away from the cellular casing (2) and by a flange plate (11, 11') facing towards the cellular casing (2), between which flange plates the respective cover plate (4, 5) is rotatably journalled on axially opposite bearings (13, 13', 14, 14'), and that the rotatable cover plates (4, 5) are drivable by a drive (18, 19, 21) disposed laterally of the cellular casing (2).

2. Device according to Claim 1, characterized in that the drive for the upper and the lower cover plate (4, 5) is provided by an external set of teeth (17, 17') on each of the cover plates (4, 5), which are engaged with an associated drive pinion (18, 18').

3. Device according to Claim 1 or 2, characterized in that the drive pinions (18, 18') for the upper and lower cover plates (4, 5) are synchronously drivable by a common, vertical drive shaft (19) from a common motor (21).

4. Device according to Claim 1 or 2, characterized in that the drive for the upper and lower cover plates (4, 5) is provided for each by a toothed belt or roller chain encompassing the cover plate, a common drive being provided for the two toothed belts or roller chains.

5. Device according to Claim 1, characterized in that the cover plates (4, 5) are axially and/or radially journalled with respect to the seating flange (8, 9) with flange plates (10, 10'; 11, 11' respectively) by ball bearings (13, 13', 14, 14') disposed outside the product space.

6. Device according to Claim 1 or 5, characterized in that the upper (8) and the lower seating flange (9) for the respective cover plate (4, 5) are of mirror-image form and are each formed of a flange plate (10, 10') facing away from the cellular casing (2) and of a further flange plate (11, 11') facing towards the cellular casing (2), between which flange plates the relevant cover plate (4, 5) is journalled on axially opposed ball bearings (13, 13', 14, 14'), and that the cellular casing (2) is preferably braced and sealed against the respective flange plate (11, 11') facing towards it.

7. Device according to Claim 1 or 6, characterized in that the flange plate (11, 11') facing towards the cellular casing (2) is constructed in one piece with this casing.

8. Device according to one of the preceding Claims, characterized in that the flange plate (10, 11) is adapted in its internal diameter to the internal diameter of the cellular casing (2) and that preferably the mounting (13, 14) and also the drive (17, 18) of the flange plate (10, 11) is sealed with respect to the cellular casing internal space (3, 3') by means of a seal (15, 16).

9. Device according to Claim 1, characterized in that the circular cylindrical cellular casing (2) can be braced between the upper (8) and the lower (9) stationary seating flange (8, 9) seating the relevant cover plate (4, 5) by means of at least two tension anchors (25-27), which preferably form at least one vertical pivot axis (32) for the cellular casing (2) which can be swung out of its operating position.

10. Device according to Claim 9, characterized in that three vertical tension anchors (25-27), centrally surrounding the cellular casing (2), are provided, one tension anchor (25) preferably having a rotary bushing (31), which is connected by two connection flanges (29, 30) disposed in V-shape in plan, or by a suitable hinge, to the cellular casing (2).

11. Device according to one of the preceding Claims, characterized in that the metering device can be connected to a pneumatic conveying line (38) having a differential pressure with respect to the feed hopper (44) of the order of 3.5 bar.

12. Device according to Claim 1 or 11, characterized in that the upper, rotating cover plate (4) possesses a pressure balancing line (40) in a region preceding the feed opening (6), which (balancing line) creates a pressure equalization between the pressure in one chamber (3) each time, created by the pressure in the conveying line (38), and the internal space of the feed hopper (44).

13. Device according to Claim 1 or 8, characterized in that the flange plates (11 and 11') facing towards the cellular casing (2) possess a leak-tight partitioning with individual chambers (3'), in register with the cellular casing (2).

## Revendications

1. Dispositif pour le dosage de produit en vrac, comportant un boîtier à cellules fixe, cylindrique, circulaire (2), ayant des chambres individuelles (3) présentant une forme de segment de cercle en section transversale, qui, dans leur zone inférieure et dans leur zone supérieure, peuvent être fermées par, à chaque fois, une plaque de recouvrement (4,5) rotative, présentant une ouverture (6,7) en forme de segment de cercle, le dispositif de dosage comportant, dans sa zone supérieure et sa zone inférieure, à chaque fois, une bride de réception (8,9) pour les plaques de recouvrement rotatives (4,5),
caractérisé en ce que la bride de réception supérieure (8) et/ou la bride de réception inférieure (9) pour les plaques de recouvrement respectives (4,5) sont formées, à chaque fois, par une plaque de bride (10,10') éloignée du boîtier à cellules (2) et une plaque de bride (11,11') en regard du boîtier à cellules (2), entre lesquelles les plaques de recouvrement respectives (4,5) sont montées rotatives sur des paliers (13,13',14,14') axialement opposés, et en ce que les plaques de recouvrement rotatives (4,5) peuvent être entraînées par un entraînement (18,19,21) agencé latéralement au boîtier à cellules (2).

2. Dispositif selon la revendication 1,
caractérisé en ce que l'entraînement de la plaque de recouvrement supérieure (4) et de la plaque de recouvrement inférieure (5) est effectué au moyen de dentures externes respectives (17,17') sur les plaques de recouvrement (4,5), qui sont en liaison avec des pignons d'entraînement correspondants (18,18').

3. Dispositif selon la revendication 1 ou 2,
caractérisé en ce que les pignons d'entraînement (18,18') pour la plaque de recouvrement supérieure (4) et pour la plaque de recouvrement inférieure (5) sont entraînés de façon synchrone, par l'intermédiaire d'un arbre d'entraînement vertical commun (19), par un moteur commun (21).

4. Dispositif selon la revendication 1 ou 2,
caractérisé en ce que l'entraînement de la plaque de recouvrement supérieure (4) et de la plaque de recouvrement inférieure (5) est effectué, à chaque fois, par l'intermédiaire d'une courroie crantée ou d'une chaîne à rouleaux entourant la plaque de recouvrement, un entraînement commun étant prévu pour les deux courroies crantées ou chaînes à rouleaux.

5. Dispositif selon la revendication 1,
caractérisé en ce que les plaques de recouvrement (4,5) sont montées axialement et/ou radialement par rapport à la bride de réception (8,9) avec des plaques de bride (10,10' ou 11,11'), par l'intermédiaire de roulements à billes (13,13', 14,14') agencés à l'extérieur de l'espace du produit.

6. Dispositif selon la revendication 1 ou 5,
caractérisé en ce que la bride de réception supérieure (8) et la bride de réception inférieure (9), pour la plaque de recouvrement respective (4,5), sont agencées de façon symétrique et sont formées, à chaque fois, par une plaque de bride (10,10') éloignée du boîtier à cellules (2) et une autre plaque de bride (11,11') en regard du boîtier à cellules (2), entre lesquelles la plaque de recouvrement respective (4,5) est montée sur des roulements à billes axialement opposés (13,13',14,14'), et en ce que le boîtier à cellules (2) est avantageusement serré et étanchéifié par rapport à la plaque de bride (11,11') à chaque fois en regard de celui-ci.

7. Dispositif selon la revendication 1 ou 6,
caractérisé en ce que la plaque de bride (11,11') en regard du boîtier à cellules (2) est réalisée en une seule pièce avec celui-ci.

8. Dispositif selon une des revendications précédentes,
caractérisé en ce que la plaque de bride (10,11) est adaptée, en ce qui concerne son diamètre interne, au diamètre interne du boîtier à cellules (2), et en ce que, avantageusement, le montage (13,14) ainsi que l'entraînement (17,18) de la plaque de bride (10,11) sont étanchéifiés par rapport à l'espace interne (3,3') du boîtier à cellules, au moyen d'un joint étanche (15,16).

9. Dispositif selon la revendication 1,
caractérisé en ce que le boîtier à cellules (2) cylindrique circulaire peut être serré entre la bride de réception supérieure (8) et la bride de réception inférieure (9), fixes, qui reçoivent les plaques de recouvrement respectives (4,5), au moyen d'au moins deux tirants (25-27) qui, avantageusement, forment au moins un axe de pivotement vertical (32) pour le boîtier à cellules (2) pouvant pivoter hors de sa position de service.

10. Dispositif selon la revendication 9,
caractérisé en ce que trois tirants (25-27) verticaux, entourant de façon centrale le boîtier à cellules (2), sont prévus, un tirant (25) présentant avantageusement une douille rotative (31) qui, par l'intermédiaire de deux brides de raccordement (29,30) agencées en forme de v en vue de dessus ou d'une charnière correspondante, est reliée au boîtier à cellules (2).

11. Dispositif selon une des revendications précédentes,
caractérisé en ce que le dispositif de dosage peut être raccordé à un conduit d'alimentation pneumatique (38) ayant une pression différentielle par rapport à la trémie d'amenée (44) de l'ordre de grandeur de 3,5 bars.

12. Dispositif selon la revendication 1 ou 11,
caractérisé en ce que la plaque de recouvrement rotative supérieure (4) présente, dans une zone en avant de l'ouverture d'amenée (6), un conduit de compensation de pression (40) qui permet une compensation de pression entre la pression dans à chaque fois une chambre (3), provoquée par la pression dans le conduit d'alimentation (38), et l'espace interne de la trémie d'amenée (44).

13. Dispositif selon la revendication 1 ou 8,
caractérisé en ce que les plaques de bride (11 et 11') en regard du boîtier à cellules (2) présentent un cloisonnement étanche, coïncidant avec le boîtier à cellules (2), ayant des chambres individuelles (3').
